# EUROPEAN PATENT SPECIFICATION

(11) **EP 2 322 584 B1**
(45) Date of publication and mention of the grant of the patent: **08.02.2017**
(21) Application number: 10251902.2
(22) Date of filing: 04.11.2010
(51) Int. Cl.: C09J 183/04, C09J 7/02

(54) **Silicone base pressure-sensitive adhesive compositions and film**
Druckempfindliche Zusammensetzung auf Siliciumbasis und Film
Compositions et film d'adhésif sensible à la pression à base de silicone

(30) Priority: 10.11.2009 JP 2009256728
(43) Date of publication of application: 18.05.2011
(73) Proprietor: Shin-Etsu Chemical Co., Ltd., Chiyoda-ku Tokyo (JP)
(72) Inventor: Kuroda, Yasuyoshi, Annaka-shi Gunma-ken (JP); Aoki, Shunji, Annaka-shi Gunma-ken (JP)
(74) Representative: Stoner, Gerard Patrick

(56) References cited:
- EP-A1- 0 537 784
- EP-A1- 1 652 899

## Description

### TECHNICAL FIELD

This invention relates to a pressure-sensitive adhesive (PSA) film and a silicone base PSA composition for forming a PSA layer of the film. The PSA film is applicable to flat panel display members, optical members (e.g., optical films), and electronic parts (e.g., printed circuit boards) for the purposes of protection and masking during their processing.

### BACKGROUND

Flat panel displays (FPD) are widely used as displays of various electronic and electric appliances. Exemplary FPDs include CRT displays, liquid crystal displays, plasma displays, organic electroluminescent (EL) displays, inorganic EL displays, LED displays, surface-conduction electron-emitter displays (SED), and field emission displays (FED) as well as touch panels utilizing these. Various films are applied on the surface of displays for different purposes such as anti-flawing, anti-staining, fingerprint-proof, antistatic, antiglare, antireflection and view angle limitation.

These films, even placed inside display units, should not entrap bubbles when they are applied on display members. If bubbles are entrapped, they should be removed easily. The applied film should not slide or peel on its own, but be easily peeled (releasability) for reapplication.

In the prior art, adhesive films of this type use PSAs comprising organic resins such as acrylic resins and urethane resins. The adhesive films using such PSAs tend to entrap bubbles when they are stuck to display members. Once bubbles are entrapped, they cause unevenness in luminance, brightness and color of the display to produce display variations, which requires additional operations such as reapplication or squeeze-out of bubbles. The bubbles once entrapped may be removed by strongly rubbing the surface of the adhesive film with fingers or by peeling the adhesive film and applying it again. Iteration of such squeezing or reapplication operation can damage the display members themselves.

While adhesive films are stored from their manufacture until the end use, a release liner is typically applied to the tacky surface of the adhesive film for protection. The release liner is peeled off just before the adhesive film is used. Also, when the adhesive film is stuck to an adherend such as a display member or optical film for protection purpose, the adhesive film is kept stuck to the adherend and peeled off at the subsequent necessary stage. In these cases, the tacky surface of the adhesive film is kept stuck to the release liner or adherend, sometimes over a long period of time, during storage or transportation. In some situations, the adhesive film may be held under hot humid conditions, for example, at a temperature of 30 to 60°C and RH 65 to 95%. Independent whether the adhesive film has the release liner applied thereto or is kept stuck to the adherend, an adhesive force required to peel the adhesive film from the release liner or the adherend must not be significantly increased even after the adhesive film is held for a certain time in a hot humid environment.

One known PSA composition for adhesive films used in display application is an organopolysiloxane composition of solventless type as disclosed in JP-A 2004-225005. The organopolysiloxane composition is cured into a PSA layer which is insufficiently adherent to a substrate, allowing separation between the substrate and the PSA layer during the applying or re-applying operation. The separation cannot be completely prevented by treating the substrate with corona discharge or a primer for adhesion improvement. Also the composition may be strongly electrostatically charged during coating operation. Due to such charges, the PSA as coated may partially flow over the period from coating to curing step, resulting in a PSA layer having an uneven surface.

Also known is a silicone PSA composition suitable for sticking various films to flat panel displays (JP-A 2006-152266). In order that the composition be coated onto a substrate to achieve satisfactory adhesion, the substrate must be pretreated with a primer. The process for manufacturing an adhesive film requires two steps, primer coating step and PSA coating step, and is thus inefficient.

Also known is a silicone rubber coating composition comprising a tackifier capable of assisting in tight adhesion of the composition to a substrate without a need for primers (JP-A 2007-191637). This composition is coated and cured into a rubber layer or PSA layer, which when stuck to an adherend, experiences a substantial increase of adhesive force with the lapse of time during storage, particularly under hot humid conditions, losing releasability.

### Citation List

- Patent Document 1:: JP-A 2004-225005
- Patent Document 2:: JP-A 2006-152266 (US 7659003, EP 1652899B1)
- Patent Document 3:: JP-A 2007-191637

An aim herein is to provide new and useful PSA films which can be applied to e.g. a flat panel display (FPD) member, with less tendency to entrap bubbles, and which after being applied does not slide or peel on its own, but can nevertheless easily be peeled by hand. Another aspect is to provide a corresponding silicone PSA composition for forming the PSA film, which can be directly applied to a surface of a substrate without primer treatment, to establish a tight bond to the substrate.

The inventors have found that the above and other objects can be attained by specific curable silicone compositions as disclosed below.

The invention provides a pressure-sensitive adhesive film, comprising a substrate and a pressure-sensitive adhesive layer disposed on at least one surface of the substrate, said pressure-sensitive adhesive layer being contiguous to the substrate without a primer layer between, and being made from a silicone pressure-sensitive adhesive composition comprising
(A) 100 to 80 parts by weight of a diorganopolysiloxane having at least two alkenyl groups and a phenyl group in a molecule, phenyl groups accounting for 1.0 to 12 mol% of all organic groups, alkenyl groups being contained in an amount of 0.0005 to 0.05 mole per 100 g of the diorganopolysiloxane, and the diorganopolysiloxane having a viscosity of at least 100,000 mPa-s at 25°C,
(B) 0 to 20 parts by weight of an organopolysiloxane comprising R\Si0₀₋₅ units and Si0₂ units in a R\Si0_{0.5}/Si0₂molar ratio in a range of from 0.6 to 1.7, wherein Rl is a monovalent C₁-**c**₁₀ hydrocarbon group, a total weight of components (A) and (B) combined being 100 parts by weight,
(C) an organohydrogenpolysiloxane containing at least three SiH groups in such an amount as to give a molar ratio of SiH groups to alkenyl groups in components (A) and {B) in a range of from 0.5 to 20,
(D) O to 8.0 parts by weight of a retarder,
(E) an addition reaction catalyst in such an amount as to give 5 to 2, 000 ppm of noble metal based on the total weight of components (A) and (B), and
(F) 25 to 900 parts by weight of an organic solvent. The composition may be free of component (B).
Typically the PSA layer has a thickness of 2 to 200 µm.
Preferably, the PSA layer has an adhesion strength of 0.001 to 1.0 N/10 mm when a test film comprising a polyethylene terephthalate film of 23 µm thick and the PSA layer of 30 µm thick coated thereon is subjected to a 180-degree peel test according to JIS Z-0237.

Preferably, the PSA layer is disposed on the surface of the substrate which has been corona treated.

### ADVANTAGEOUS EFFECTS

The PSA film can be applied to a member without entrapping bubbles. After applied, the PSA film does not slide or peel on its own, but can be easily peeled by hand.

### FURTHER EXPLANATIONS; OPTIONS AND PREFRENCES

The terms "a", "an" and "the" do not denote a limitation of quantity, but rather denote the presence of at least one of the referenced item. As used herein, the terminology " (Cx-Cy) ", as applied to a particular unit, such as, for example, a chemical compound or a chemical substituent group, means having a carbon atom content of from "x" carbon atoms to "y" carbon atoms per such unit. The acronym "PSA" stands for pressure-sensitive adhesive.

In the PSA composition, component (A) is a diorganopolysiloxane having at least two alkenyl groups and a phenyl group in a molecule. Suitable diorganopolysiloxanes include those of the following formulae.

R3ₐR²₍₃₋ₐ₎SiO(R³R²SiO)ₘ(R²₂SiO)ₙSiR²₍₃₋ₐ₎R³a (1)

HOR²₂SiO(R³R²SiO)ₘ₊₂(R²₂SiO)ₙSiR²₂OH (2)

(R³ₐR²₍₃₋ₐ₎SiO_{1/2})ₒ(R³R²SiO_{2/2})ₚ(R²₂SiO_{2/2})_{q}(R⁴SiO_{3/2})ᵣ(SiO_{4/2})ₛ (3)

Herein, R² is each independently a substituted or unsubstituted monovalent hydrocarbon group free of aliphatic unsaturation; R³ is an organic group having an alkenyl group; "a" is an integer of from 0 to 3, preferably 1; m is an integer of 0 or greater, provided that m is 2 or greater when "a" is zero; n is an integer of at least 10, and the sum of m+n is such that the diorganopolysiloxane may have a viscosity of at least 100,000 mPa-s at 25° C. R⁴ is R² or R³, "o" is an integer of 3 to 12, p is an integer of 0 or greater, q is an integer of at least 10, the sum of r+s is an integer of 1 to 5, and the sum of o+p+q+r+s is such that the diorganopolysiloxane may have a viscosity of at least 100,000 mPa-s at 25° C.

Preferably, R² is a C₁-C₁₀ hydrocarbon group, examples of which include alkyl groups such as methyl, ethyl, propyl, and butyl, cycloalkyl groups such as cyclohexyl, and aryl groups such as phenyl and tolyl. Also included are substituted forms of the foregoing in which some or all carbon-bonded hydrogens are replaced by halogen, amino, hydroxyl, cyano or other radicals, such as 3-aminopropyl, 3,3,3-trifluoropropyl, 3-hydroxypropyl and 3-cyanopropyl. More preferably, R² is methyl or phenyl.

A content of phenyl groups ranges from 1.0 to 12 mol%, preferably from 1.5 to 9 mol% of all organic groups in the diorganopolysiloxane. A phenyl content of less than 1.0 mol% leads to insufficient adhesion between the PSA layer and the substrate. A phenyl content of more than 12 mol% leads to more cyclic low-molecular-weight siloxane residues, with the risk that any residual PSA may be left upon subsequent peeling. Phenyl groups may be incorporated as (C₆H₅)₂SiO_{2/2} units, (C₆H₅)R⁰SiO_{2/2} units, or (C₆H₅)SiO_{3/2} units wherein R⁰ is a substituted or unsubstituted monovalent hydrocarbon group free of aliphatic unsaturation, excluding phenyl, and preferably an alkyl group. Preferably phenyl groups are incorporated as (C₆H₅)₂SiO_{2/2} units.

The diorganopolysiloxane having the above-specified phenyl content is effective for improving adhesion to the substrate and particularly effective for preventing any loss of adhesion when the PSA film is long held under hot humid conditions.

R³ is preferably an alkenyl-containing organic group of 2 to 10 carbon atoms, examples of which include vinyl, allyl, hexenyl, octenyl, acryloylpropyl, acryloylmethyl, methacryloylpropyl, cyclohexenylethyl, and vinyloxypropyl, with vinyl being most preferred from the commercial aspect. A content of alkenyl groups is 0.0005 to 0.05 mole per 100 g of the diorganopolysiloxane (A). Within this range, the best adhesive property is achievable when the PSA film in the FPD application is considered. A more appropriate alkenyl content is 0.0007 to 0.01 mole/100 g. An alkenyl content of less than 0.0005 mole/100 g results in a PSA composition which is less curable whereas an alkenyl content of more than 0.05 mole/100 g leads to a loss of adhesive property and hence, a loss of adhesion strength.

The diorganopolysiloxane (A) may be oil or gum in nature. Oil component (A) preferably has a viscosity at 25° C of at least 100,000 mPa-s. A viscosity of less than 100,000 mPa-s is inadequate because the composition becomes difficult to coat and cissing occurs on the coated surface. Gum diorganopolysiloxane with a viscosity in excess of 1,000,000 mPa-s is preferably such that when it is diluted with toluene in a concentration of 30% by weight, the resulting solution may have a viscosity of less than or equal to 100,000 mPa-s (30% solution viscosity). A 30% solution viscosity of 3,000 to 30,000 mPa-s is more preferred. If the 30% solution viscosity exceeds 100,000 mPa-s, the composition is too viscous and difficult to agitate during preparation. Component (A) may be a mixture of two or more diorganopolysiloxanes. When such a mixture is used as component (A), diorganopolysiloxanes are combined such that a total of alkenyl groups in the mixture may range from 0.0005 to 0.05 mole/100 g. Notably, the viscosity as used herein is measured at 25° C by a rotational viscometer.

Typically, the diorganopolysiloxane (A) is prepared by ring-opening polymerization of monomers such as octamethylcyclotetrasiloxane in the presence of a catalyst. Since the polymerization product contains low-molecular-weight cyclic siloxanes, it is preferably purified by heating under reduced pressure while passing an inert gas into the product, for distilling off the cyclic siloxanes.

Component (B) is an organopolysiloxane comprising R¹₃SiO_{0.5} units and SiO₂ units wherein a molar ratio of R¹₃SiO_{0.5} units to SiO₂ units ranges from 0.6/1 to 1.7/1. A R¹₃SiO_{0.5}/SiO₂ molar ratio of less than 0.6 may lead to a loss of adhesion strength or tack whereas a ratio of more than 1.7 may lead to a loss of adhesion strength or retaining force.

Herein R¹ is a substituted or unsubstituted monovalent C₁-C₁₀ hydrocarbon group, examples of which include alkyl groups such as methyl, ethyl, propyl and butyl, cycloalkyl groups, aryl groups such as phenyl, and alkenyl groups such as vinyl, allyl and hexenyl. Also included are substituted forms of the foregoing in which some or all carbon-bonded hydrogens are replaced by halogen, amino, hydroxyl, cyano or other radicals, such as 3-aminopropyl, 3,3,3-trifluoropropyl, 3-hydroxypropyl and 3-cyanopropyl. Among others, methyl is most preferred.

Component (B) may have OH groups, preferably in an amount of 0.01 to 4.0% by weight based on its total weight. An OH content of less than 0.01 wt% may result a loss of cohesion of a PSA composition whereas an OH content of more than 4.0 wt% may result a loss of tack of a PSA composition.

Component (B) may be a mixture of two or more organopolysiloxanes. Besides, R¹SiO_{1.5} units and/or R¹₂SiO units may be incorporated in component (B) insofar as they do not adversely impact the properties of the composition.

Components (A) and (B) are combined in a weight ratio A/B which ranges from 100/0 to 80/20, preferably from 100/0 to 90/10. If organopolysiloxane (B) is richer beyond the limit of 80/20, then the composition has an extremely high adhesion strength to interfere with subsequent peeling or becomes less adherent to the substrate. The range indicates that component (B) is optional. That is, the composition may be free of component (B).

Component (C) serving as a crosslinker is an organohydrogenpolysiloxane containing at least three silicon-bonded hydrogen atoms (i.e., SiH groups), which may be linear or branched. Examples of component (C) include, but are not limited to, those of the following formulae.

H_{b}R²_{(3-b)}SiO(HR²SiO)ₜ(R²₂SiO)ᵤSiR²_{(3-b)}H_{b}

(H_{b}R²_{(3-b)}SiO_{1/2})ᵥ(HR²SiO_{2/2})_{w}(R²₂SiO_{2/2})ₓ(R²SiO_{3/2})_{y}(SiO_{4/2})_{z}

Herein R² is each independently a substituted or unsubstituted monovalent hydrocarbon group free of aliphatic unsaturation; b is 0 or 1; t and u each are an integer of 0 or greater, with the proviso that t is at least 2 when b is 0, and the sum of t+u is such that the organohydrogenpolysiloxane may have a viscosity of 1 to 500 mPa-s at 25° C; v is an integer of 3 to 12, w is an integer of 0 or greater, and the sum of y+z is 1 to 5, and the sum of v+w+x+y+z is such that the organohydrogenpolysiloxane may have a viscosity of 1 to 1,000 mPa-s at 25° C.

As described above, R² is preferably a monovalent C₁-C₁₀ hydrocarbon group, examples of which include alkyl groups such as methyl, ethyl, propyl, and butyl, cycloalkyl groups such as cyclohexyl, aryl groups such as phenyl and tolyl, and substituted forms of the foregoing in which some or all carbon-bonded hydrogens are replaced by halogen, amino, hydroxyl, cyano or other radicals, such as 3-aminopropyl, 3,3,3-trifluoropropyl, 3-hydroxypropyl and 3-cyanopropyl. More preferably, R² is methyl or phenyl.

Preferably the organohydrogenpolysiloxane (C) has a viscosity of 1 to 1,000 mPa-s at 25° C, more preferably 2 to 500 mPa-s at 25°C. Component (C) may be a mixture of two or more organohydrogenpolysiloxanes. Also included are those of structures further comprising [R²SiO_{3/2}], [HSiO_{3/2}], and/or [SiO_{4/2}] units.

Component (C) is used in such an amount as to give a molar ratio of SiH groups to alkenyl groups in components (A) and (B) in a range of from 0.5/1 to 20/1, preferably from 0.8/1 to 15/1. If the SiH/alkenyl molar ratio is less than 0.5, crosslinking density may be too low to provide a cohesion and retaining force. If the SiH/alkenyl molar ratio exceeds 20, crosslinking density may be too high to attain appropriate adhesion strength and tack.

Component (D) is a retarder to prevent the PSA compositions from thickening or gelling during preparation, or before heat curing when coated on a substrate. These are well known (e.g. acetylene type) and suitable ones include 3-methyl-1-butyn-3-ol, 3-methyl-1-pentyn-3-ol, 3,5-dimethyl-1-hexyn-3-ol, 1-ethynylcyclohexanol, 3-methyl-3-trimethylsiloxy-1-butyne, 3-methyl-3-trimethylsiloxy-1-pentyne, 3,5-dimethyl-3-trimethylsiloxy-1-hexyne, 1-ethynyl-1-trimethysiloxycyclohexane, bis(2,2-dimethyl-3-butynoxy)dimethylsilane, 1,3,5,7-tetramethyl-1,3,5,7-tetravinylcyclotetrasiloxane, and 1,1,3,3-tetramethyl-1,3-divinyldisiloxane.

In the composition, component (D) may be present in an amount of 0 to 8.0 parts by weight, preferably 0.05 to 2.0 parts by weight per 100 parts by weight of components (A) and (B) combined. If the amount exceeds 8.0 parts, the composition may become less curable.

Component (E) is an addition reaction catalyst. Suitable catalysts are platinum group metal base catalysts including platinum base catalysts such as chloroplatinic acid, chloroplatinic acid in alcohols, reaction products of chloroplatinic acid with alcohols, reaction products of chloroplatinic acid with olefin compounds, reaction products of chloroplatinic acid with vinyl-containing siloxanes, platinum-olefin complexes, and complexes of platinum with vinyl-containing siloxanes, rhodium complexes, and ruthenium complexes. On use, these catalysts may be dissolved or dispersed in solvents such as isopropanol and toluene, or silicone oil.

Component (E) is added to the composition in such an amount as to give 5 to 2,000 ppm, preferably 10 to 500 ppm of noble metal (platinum group metal) based on the total weight of components (A) and (B) combined. With less than 5 ppm of noble metal, the composition may become less curable and have a low crosslinking density and low retaining force. With more than 2,000 ppm of noble metal, the composition may have a short pot life.

Component (F) is an organic solvent. Suitable organic solvents include aromatic hydrocarbon solvents such as toluene and xylene; aliphatic hydrocarbon solvents such as hexane, heptane, octane, isooctane, decane, cyclohexane, methylcyclohexane, and isoparaffin; hydrocarbon solvents such as industrial gasoline, petroleum benzene, and solvent naphtha; ketone solvents such as acetone, methyl ethyl ketone, 2-pentanone, 3-pentanone, 2-hexanone, 2-heptanone, 4-heptanone, methyl isobutyl ketone, diisobutylketone, acetonylacetone, and cyclohexanone; ester solvents such as ethyl acetate, propyl acetate, isopropyl acetate, butyl acetate, and isobutyl acetate; ether solvents such as diethyl ether, dipropyl ether, diisopropyl ether, dibutyl ether, 1,2-dimethoxyethane, and 1,4-dioxane; solvents having both ester and ether moieties such as 2-methoxyethyl acetate, 2-ethoxyethyl acetate, propylene glycol monomethyl ether acetate, and 2-butoxyethyl acetate; siloxane solvents such as hexamethyldisiloxane, octamethyltrisiloxane, octamethylcyclotetrasiloxane, decamethylcyclopentasiloxane, tris(trimethylsiloxy)methylsilane, and tetrakis(trimethylsiloxy)silane; and mixtures thereof. Preferred are aliphatic hydrocarbon solvents such as hexane, heptane, octane, isooctane, decane, cyclohexane, methylcyclohexane, and isoparaffin. Also preferred is a mixture of the aliphatic hydrocarbon solvent with an ether solvent, an ester solvent, or a solvent having both ester and ether moieties.

The composition may be prepared by mixing and dissolving components (A), (B), (C), (D), and (F) and optional components. The PSA film may be prepared by further diluting the mixture with an organic solvent, if necessary, admixing component (E) therewith, and then applying to a substrate to be described below.

Part or all of components (A) and (B) may be added in a reaction product form. Specifically, part or all of components (A) and (B) are reacted in the presence of a basic catalyst and optionally, part or all of component (F) for a certain time to remove residual silicon-bonded hydroxyl groups in these components via dehydration condensation. Examples of the basic catalyst include metal hydroxides such as lithium hydroxide, sodium hydroxide, potassium hydroxide, and calcium hydroxide; carbonates such as sodium carbonate and potassium carbonate; bicarbonates such as sodium bicarbonate; metal alkoxides such as sodium methoxide and potassium butoxide; organometals such as butyllithium; potassium hydroxide-siloxane complexes; and nitrogen compounds such as ammonia gas, ammonia water, methylamine, trimethylamine, and triethylamine. Preferred are ammonia gas and ammonia water. The reaction may be carried out at a temperature of 20 to 150° C and typically, from room temperature to the reflux temperature of component (F). The reaction time may range from 0.5 to 10 hours, preferably from 1 to 6 hours, thought it is not limited thereto. After the reaction, a neutralizing agent may be added to neutralize the basic catalyst, if needed. Examples of the neutralizing agent include acidic gases such as hydrogen chloride and carbon dioxide, organic acids such as acetic acid, n-octylic acid and citric acid, and mineral acids such as hydrochloric acid, sulfuric acid, and phosphoric acid.

In addition to the above components, the silicone PSA composition may comprise optional components. Additional components include non-reactive organopolysiloxanes free of alkenyl such as dimethylpolysiloxane and dimethyldiphenylpolysiloxane, and organopolysiloxanes containing one or two SiH groups in a molecule; antioxidants such as phenol, quinone, amine, phosphorus, phosphite, sulfur, and thioether base compounds; photostabilizers such as hindered amine, triazole and benzophenone derivatives; flame retardants such as phosphate, halogen, phosphorus, and antimony base compounds; antistatic agents such as cationic, anionic, and nonionic surfactants; dyes and pigments; and solvents for reducing the viscosity in coating, for example, aromatic solvents such as toluene and xylene, aliphatic solvents such as hexane, heptane, octane and isoparaffins, ketones such as methyl ethyl ketone and methyl isobutyl ketone, esters such as ethyl acetate and isobutyl acetate, and ethers such as diisopropyl ether and 1,4-dioxane, and mixtures thereof.

The silicone PSA composition thus compounded is preferably such that a PSA layer formed therefrom may show an adhesion strength of 0.001 to 1.0 N/10 mm when a PSA film comprising a polyethylene terephthalate film of 23 µm thick and the PSA layer of 30 µm thick coated thereon is applied to a stainless steel plate and subjected to a 180-degree peel test according to JIS Z-0237. More preferably the adhesion strength ranges from 0.004 to 0.4 N/10 mm and even more preferably from 0.004 to 0.1 N/10 mm. An adhesion strength of less than 0.001 N/10 mm indicates a short tack and a PSA layer may not stick to a display member surface. An adhesion strength in excess of 1.0 N/10 mm indicates excess tack and a PSA film may be difficult to peel by hand. An appropriate adhesion strength in the range may be obtained by adjusting the type and amount of alkenyl groups in component (A) or the proportion of components (A) and (B).

The silicone PSA composition may be coated onto various substrates and cured under suitable conditions to form a PSA layer.

Examples of the substrate include films of plastics such as polyester, poly(meth)acrylate, polycarbonate, polyethylene, polypropylene, polystyrene, polyamide, polyimide, polyphenylene sulfide, polytetrafluoroethylene, polyvinylchloride, polyurethane, triacetylcellulose, polyacetal, norbornene resins (commercially available under the trade name of Arton from JSR Corp.), cycloolefin resins (commercially available under the trade name of ZEONOR from Zeon Corp.), epoxy resins, and phenolic resins, and laminates comprising two or more such films. Of these, polyester films (e.g., polyethylene terephthalate, polybutylene terephthalate, and polyethylene naphthalate), polyimide films, polyacrylate films (e.g., polyacrylate and polymethacrylate), and polycarbonate films are preferred.

The substrate in film form may have any desired thickness although the thickness often ranges from 2 to 300 µm, preferably from 10 to 150 µm.

To improve adhesion between the substrate and the PSA layer, the substrate may be pretreated such as by corona treatment, etching, plasma treatment or sandblasting.

Corona treatment is preferred. Primer treatment is omitted, that is, the PSA film is free of a primer layer.

Also preferably a surface of the PSA film opposite to the PSA layer is treated to be damage-proof, stain-proof, fingerprint-proof, antiglare, antireflection or antistatic. This treatment may be performed before or after the PSA layer is provided. Exemplary damage-proof treatments or hardcoat treatments include coating of hardcoat agents based on acrylate, silicone, oxetane, inorganic materials, and organic/inorganic hybrid materials. Exemplary stain-proof treatments include fluorinated, silicone, ceramic, and photocatalyst stain-proof treatmet agents. Exemplary antireflection treatments include wet treatment by coating and dry treatment by vapor deposition or sputtering, both of a fluorinated or silicone antireflection agent. Exemplary antistatic treatments include surfactants, silicone, organoboron, electroconductive polymer, and metal oxide antistatic agents, and metallizing.

Any known means or method for application may be used in coating the substrate with the PSA composition. For example, a comma coater, lip coater, roll coater, die coater, knife coater, blade coater, rod coater, kiss-roll coater, and gravure coater may be used. Screen printing, dipping, casting and spraying methods are also acceptable.

The composition is coated onto the substrate in such an amount that a PSA layer as cured may preferably have a thickness of 2 to 200 µm, more preferably 3 to 100 µm. It may be cured at a temperature of 80 to 130° C for 30 seconds to 3 minutes although the curing conditions are not limited thereto.

The PSA film may be prepared by directly coating the PSA composition onto the substrate, or by coating the PSA composition on a release film or release paper which has been coated with a release agent, curing the composition and then transferring the cured composition to the substrate. A protective film may be applied on the PSA layer, if necessary, to protect the PSA layer during storage or transportation.

The PSA film prepared using the silicone PSA composition is used for touch panels and flat panel displays (FPD) for displaying letters, symbols, and images in various appliances such as, for example, TV monitors, computer monitors, handheld terminal monitors, surveillance monitors, video cameras, digital cameras, cell phones, instrumental panel displays of automobiles, facilities, appliances, and tools, automatic ticket vending machines, and automated teller machines. Examples include displays such as CRT displays, liquid crystal displays, plasma displays, organic EL displays, inorganic EL displays, LED displays, SED displays, FED displays and touch panels using these displays. The PSA film is used to protect the surface of these displays from damages, stains, fingerprints, electric charges, to prevent reflection and glare, or to limit view angle.

The PSA film is also useful as protective films during manufacture of optical films and electronic parts. For example, it may be used as adhesive film for protection or masking during processing of optical components such as polarizers and diffusers, and temperature-resistant masking tape during processing of electronic parts such as flexible printed circuit boards.

### EXAMPLES

The invention will be explained with reference to the following Examples, but not limited thereto. All parts and % are by weight. The term "Me" stands for methyl, "Vi" for vinyl, and "Ph" for phenyl. Property values are as measured by the following test methods. The viscosity is an absolute viscosity as measured at 25° C by a rotational viscometer. The term "30% solution viscosity" is a viscosity of a 30 wt% toluene solution of diorganopolysiloxane.

### Initial adhesion strength

A PSA film was prepared by applying a silicone PSA composition solution onto a polyethylene terephthalate film of 23 µm thick with an applicator and heat curing at 130° C for 1 minute to form a PSA layer of 30 µm thick. The PSA film was cut into a PSA tape of 10 mm wide, which was placed on a stainless steel plate and bonded thereto by moving a rubber-lined pressure roller of 2 kg weight on the strip twice back and forth. The assembly was held at room temperature for about 20 hours, after which it was tested by a tensile tester. Measured was a force (in N/10 mm) required to peel the tape off from the steel plate by pulling at a speed of 300 mm/min and an angle of 180°.

### Aged adhesion strength

A PSA film was prepared as in the adhesion strength evaluation. The PSA film was cut into a PSA tape of 10 mm wide, which was placed on a stainless steel plate and bonded thereto by moving a rubber-lined pressure roller of 2 kg weight on the strip twice back and forth. The assembly was held at 60° C and 90% RH for 7 days. After return to room temperature, it was tested by a tensile tester. Measured was a force (in N/10 mm) required to peel the tape off from the steel plate by pulling at a speed of 300 mm/min and an angle of 180°.

### Retaining force

A PSA film was prepared as in the adhesion strength evaluation. The PSA film was cut into a PSA tape of 75 mm long and 25 mm wide, which was stuck to a lower surface of a stainless steel plate over a bond area of 25 mm × 25 mm. A weight of 1 kg was attached to the free end of the suspending tape portion. With the tape vertically suspended, the setup was held at 150°C for 1 hour. A peeled distance of the tape bond area was measured with a microscope.

### Bubble entrapment

A PSA film was prepared by applying a silicone PSA composition solution onto a PET film of 75 µm thick with an applicator and heat curing at 130° C for 1 minute to form a PSA layer of 30 µm thick. The PSA film was cut into a piece of 10 cm × 20 cm, which was manually stuck to a glass plate by extending it longitudinally from one short side. Bubble entrapment was observed and rated according to the following criteria.
○: No bubbles entrapped, very good sticking
Δ: Some bubbles entrapped, could be easily squeezed out with finger
×: Bubbles entrapped, could not be squeezed out with finger

### Releasability

A PSA film was prepared and stuck to a glass plate as in the bubble entrapment test. It was peeled off from the glass plate by hand. Releasability was rated according to the following criteria.
○: Film could be easily peeled by hand without fold or bend.
Δ: Film could be peeled by hand, but folded or bent. No adhesive left on glass plate.
×: Film could be peeled by hand, but folded or bent. Some residual adhesive found on glass plate.

### Substrate adhesion

A PSA film was prepared as in the bubble entrapment test. It was aged under certain conditions (room temperature for 1 day, or 60° C and 90% RH for 7 days), after which it was returned to the normal state. The PSA layer was flawed with nails, and the flawed area was rubbed with fingers. It was observed whether or not the layer was rubbed off.
○: not rubbed off
Δ: partly rubbed off
× : wholly rubbed off

### Primer treatment

In Examples and Comparative Examples, untreated substrates were used unless otherwise stated. When a substrate was primer treated, a condensation type silicone primer composition was used comprising a hydroxyl-terminated diorganopolysiloxane, an organohydrogenpolysiloxane, and dioctyltin diacetate as condensation reaction catalyst.

The dimethylpolysiloxanes used in Examples are represented by the following formula (I).

ViMe₂SiO(ViMeSiO)ₓ(Me₂SiO)_{y}(Ph₂SiO)_{z}SiMe₂Vi ( )

### Example 1

100 parts of a gum-like vinyl and phenyl-containing dimethylpolysiloxane Al of formula (I) wherein x = 10, y = 7,878, and z = 120, having a 30% solution viscosity of 24,000 mPa-s, a vinyl content of 0.002 mole/100 g, and a phenyl content of 1.5 mol% was mixed with 66.7 parts of toluene. To the mixture were added 1.15 parts of an organohydrogenpolysiloxane Cl having SiH groups of the formula:

Me₃SiO(HMeSiO)₄₀SiMe₃

(referred to as "crosslinker C1", hereinafter) and 0.20 part of ethynyl cyclohexanol.

To 100 parts of the mixture having a siloxane content of about 60% were added 50 parts of toluene and 0.5 part of a toluene solution of a platinum/vinyl-containing siloxane complex having a platinum concentration of 0.5% (referred to as "platinum complex solution", hereinafter). Further mixing yielded a silicone PSA composition having a siloxane content of about 40%, which was evaluated by the aforesaid test methods.

### Example 2

90 parts of a gum-like vinyl and phenyl-containing dimethylpolysiloxane A2 of formula (I) wherein x = 11, y = 7,952, and z = 246, having a 30% solution viscosity of 26,000 mPa-s, a vinyl content of 0.002 mole/100 g, and a phenyl content of 3.0 mol%, and 16.7 parts of a 60% toluene solution of a polysiloxane B1 consisting of Me₃SiO_{0.5} units and SiO₂ units in a molar ratio Me₃SiO_{0.5}/SiO₂ of 0.85 were mixed with 60.0 parts of toluene. To the mixture were added 0.35 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Example 3

100 parts of a vinyl and phenyl-containing dimethylpolysiloxane A3 of formula (I) wherein x = 1, y = 920, and z = 29, having a viscosity of 100,000 mPa-s at 25° C, a vinyl content of 0.004 mole/100 g, and a phenyl content of 3.0 mol% was mixed with 66.7 parts of toluene. To the mixture were added 1.28 parts of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 1

100 parts of a vinyl and phenyl-containing dimethylpolysiloxane A4 of formula (I) wherein x = 20, y = 677, and z = 21, having a viscosity of 80,000 mPa-s at 25° C, a vinyl content of 0.04 mole/100 g, and a phenyl content of 3.0 mol% was mixed with 66.7 parts of toluene. To the mixture were added 15.4 parts of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 2

100 parts of a gum-like vinyl and phenyl-containing dimethylpolysiloxane A5 of formula (I) wherein x = 0, y = 7,484, and z = 114, having a 30% solution viscosity of 22,800 mPa-s, a vinyl content of 0.0002 mole/100 g, and a phenyl content of 1.5 mol% was mixed with 66.7 parts of toluene. To the mixture were added 0.04 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 3

100 parts of a gum-like vinyl and phenyl-containing dimethylpolysiloxane A6 of formula (I) wherein x = 326, y = 7,090, and z = 108, having a 30% solution viscosity of 20,300 mPa-s, a vinyl content of 0.06 mole/100 g, and a phenyl content of 1.5 mol% was mixed with 66.7 parts of toluene. To the mixture were added 11.54 parts of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 4

100 parts of a gum-like vinyl-containing dimethylpolysiloxane A7 of formula (I) wherein x = 10, y = 8,398, and z = 0, having a 30% solution viscosity of 26,700 mPa-s, a vinyl content of 0.002 mole/100 g, and a phenyl content of 0 mol% was mixed with 66.7 parts of toluene. To the mixture were added 0.90 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 5

100 parts of a gum-like vinyl and phenyl-containing dimethylpolysiloxane A8 of formula (I) wherein x = 13, y = 6,968, and z = 1,230, having a 30% solution viscosity of 24,500 mPa-s, a vinyl content of 0.002 mole/100 g, and a phenyl content of 15 mol% was mixed with 66.7 parts of toluene. To the mixture were added 0.64 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 6

70 parts of a gum-like vinyl and phenyl-containing dimethylpolysiloxane A9 of formula (I) wherein x = 13, y = 6,968, and z = 1,230, having a 30% solution viscosity of 24,500 mPa-s, a vinyl content of 0.002 mole/100 g, and a phenyl content of 15 mol% and 50 parts of a 60% toluene solution of a polysiloxane B1 consisting of Me₃SiO_{0.5} units and SiO₂ units in a molar ratio Me₃SiO_{0.5}/SiO₂ of 0.85 were mixed with 46.7 parts of toluene. To the mixture were added 0.54 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

### Comparative Example 7

To 100 parts of a vinyl-containing dimethylpolysiloxane A10 of formula (I) wherein x = 0, y = 448, and z = 0, having a viscosity of 5,000 mPa-s at 25° C, a vinyl content of 0.006 mole/100 g, and a phenyl content of 0 mol% were added 1.15 parts of crosslinker C1 and 0.20 part of ethynyl cyclohexanol. The ingredients were mixed.

To 100 parts of the mixture having a siloxane content of about 100% was added 0.83 part of a silicone solution of a platinum/vinyl-containing siloxane complex having a platinum concentration of 0.5%. Further mixing yielded a silicone PSA composition of solventless type, which was similarly evaluated.

### Comparative Example 8

70 parts of a gum-like vinyl and phenyl-containing dimethylpolysiloxane A11 of formula (I) wherein x = 12, y = 7,198, and z = 800, having a 30% solution viscosity of 24,000 mPa-s, a vinyl content of 0.002 mole/100 g, and a phenyl content of 10 mol% and 50 parts of a 60% toluene solution of polysiloxane B1 were mixed with 46.7 parts of toluene. To the mixture were added 0.72 part of crosslinker C1 and 0.20 part of ethynyl cyclohexanol.

To 100 parts of the mixture having a siloxane content of about 60% were added 50 parts of toluene and 0.5 part of the platinum complex solution. Further mixing yielded a silicone PSA composition having a siloxane content of about 40%, which was similarly evaluated.

In the substrate adhesion test, a PSA film was prepared by coating a PET film of 75 µm thick with the condensation cure silicone primer composition, heat curing the coating at 120° C for 30 seconds to form a primer layer of 0.2 g/m², and coating the silicone PSA composition of Comparative Example 8 on the primer layer.

### Comparative Example 9

To 87 parts of a vinyl and phenyl-containing dimethylpolysiloxane A12 of formula (I) wherein x = 0, y = 378, and z = 20, having a viscosity of 5,000 mPa-s at 25° C, a vinyl content of 0.007 mole/100 g, and a phenyl content of 5 mol% and 13 parts of a polysiloxane B2 consisting of Me₃SiO_{0.5} units, Me₂ViSiO_{0.5} units, and SiO₂ units in a molar ratio Me₃SiO_{0.5}/Me₂ViSiO_{0.5}/SiO₂ of 39.5/6.5/54 were added 2.69 parts of crosslinker C1, 0.20 part of ethynyl cyclohexanol, and 0.87 part of 3-glycidoxypropyltrimethylsilane as a tackifier.

To 100 parts of the mixture having a siloxane content of about 100% was added 0.83 part of a silicone solution of a platinum/vinyl-containing siloxane complex having a platinum concentration of 0.5%. Further mixing yielded a silicone PSA composition of solventless type, which was similarly evaluated.

### Comparative Example 10

To 100 parts of vinyl and phenyl-containing dimethylpolysiloxane A12 were added 1.35 parts of crosslinker C1, 0.20 part of ethynyl cyclohexanol, and 0.87 part of 3-glycidoxypropyltrimethylsilane as a tackifier.

To 100 parts of the mixture having a siloxane content of about 100% was added 0.83 part of a silicone solution of a platinum/vinyl-containing siloxane complex having a platinum concentration of 0.5%. Further mixing yielded a silicone PSA composition of solventless type, which was similarly evaluated.

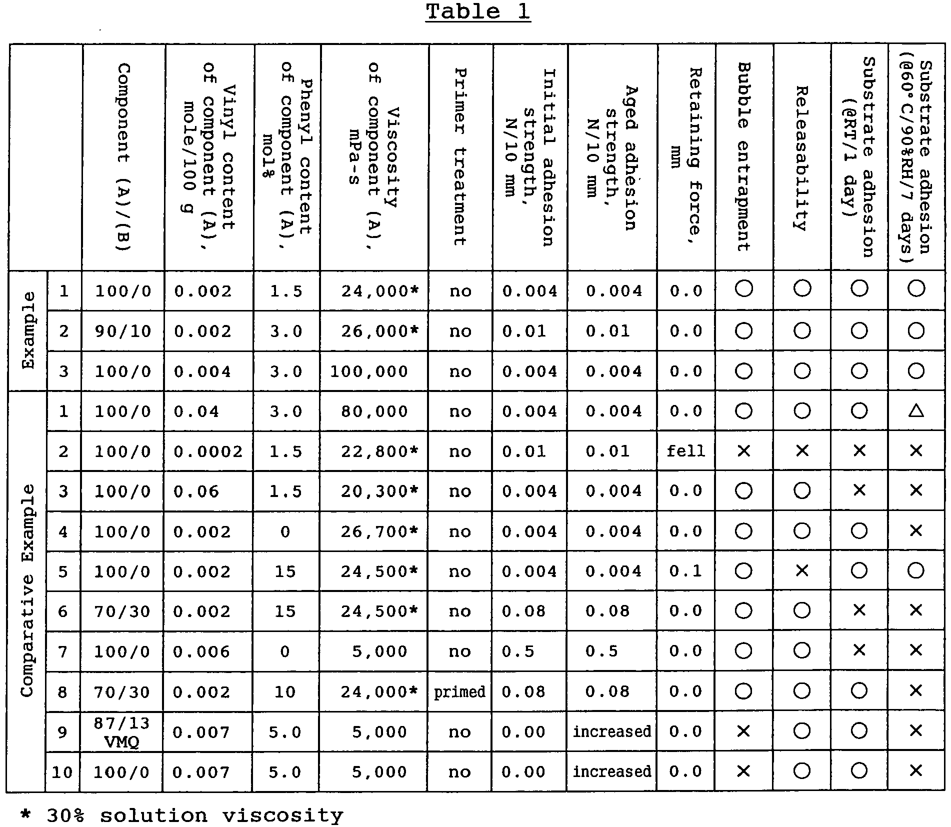

### Note

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. A pressure-sensitive adhesive film, comprising a substrate and a pressure-sensitive adhesive layer disposed on at least one surface of the substrate, said pressure-sensitive adhesive layer being contiguous to the substrate without a primer layer between, and being made from a silicone pressure-sensitive adhesive composition comprising
(A) 100 to 80 parts by weight of a diorganopolysiloxane having at least two alkenyl groups and phenyl group in a molecule, phenyl groups accounting for 1.0 to 12 mol% of all organic groups, alkenyl groups being contained in an amount of 0.0005 to 0.05 mole per 100g of the diorganopolysiloxane, and the diorganopolysiloxane having a viscosity of at least 100,000 mPa.s at 25°C,
(B) 0 to 20 parts by weight of an organopolysiloxane comprising R¹₃SiO_{0.5} units and SiO₂ units in a R¹₃SiO_{0.5}/SiO₂ molar ratio in a range of from 0.6 to 1.7, wherein R¹ is a monovalent C₁-C₁₀ hydrocarbon group, a total weight of components (A) and (B) combined being 100 parts by weight,
(C) an organohydrogenpolysiloxane containing at least three SiH groups, in such an amount as to give a molar ratio of SiH groups to alkenyl groups in components (A) and (B) in a range of from 0.5 to 20,
(D) 0 to 8.0 parts by weight of a retarder,
(E) an addition reaction catalyst in such an amount as to give 5 to 2,000 ppm of noble metal based on the total weight of components (A) and (B), and
(F) 25 to 900 parts by weight of an organic solvent.

2. An adhesive film of claim 1 in which said adhesive composition is free of component (B).

3. An adhesive film of claim 1 or 2 in which said adhesive composition is such as to provide an adhesion strength of 0.001 to 1.0N/10mm when a test film, comprising polyethylene terephthalate film 23 µm thick and a cured layer of the pressure-sensitive adhesive composition 30 µm thick coated thereon, is subjected to a 180-degree peel test according to JIS Z-0237.

4. An adhesive film of claim 1, 2 or 3 in which the diorganopolysiloxane (A) in the adhesive composition is selected from those of the following formulae (1), (2) and (3) :
R³ₐR²₍₃₋ₐ₎SiO(R³R²SiO)ₘ(R²₂SiO)ₙSiR²₍₃₋ₐ₎R³ₐ (1)
HOR²₂SiO(R³R²SiO)ₘ₊₂(R²₂SiO)ₙSiR²₂OH (2)
(R³ₐR²₍₃₋ₐ₎SiO_{1/2})ₒ(R³R²SiO_{2/2})ₚ(R²₂SiO_{2/2})_{q}(R⁴SiO_{3/2})ᵣ(SiO_{4/2})ₛ (3)
wherein
each R² independently is a substituted or unsubstituted monovalent hydrocarbon group free of aliphatic unsaturation;
R³ is an organic group having an alkenyl group;
a is an integer of from 0 to 3, preferably 1;
R⁴ is selected from the options for R² and R³;
m is an integer of 0 or greater, provided that m is 2 or greater when a is zero, n is an integer of at least 10, and the sum m+n is such that the diorganopolysiloxane of formula (1) or (2) has a viscosity of at least 100,000 mPa.s at 25°C;
o is an integer of 3 to 12, p is an integer of 0 or greater, q is an integer of at least 10, the sum r+s is an integer of 1 to 5, and the sum o+p+q+r+s is such that the diorganopolysiloxane of formula (3) has a viscosity of at least 100,000 mPa.s at 25°C.

5. An adhesive film of any one of the preceding claims in which in said adhesive composition, phenyl groups account for from 1.5 to 9 mol% of all organic groups in the diorganopolysiloxane (A).

6. An adhesive film of any one of the preceding claims in which in said adhesive composition the diorganopolysiloxane (A) is a gum diorganopolysiloxane which when diluted in toluene in a concentration of 30% by weight has a viscosity from 3,000 to 30,000 mPa.s as measured at 25°C by rotational viscometer.

7. An adhesive film of any one of the preceding claims wherein the pressure-sensitive adhesive layer has a thickness of 2 to 200 µm.

8. An adhesive film of any one of the preceding claims wherein the surface of the substrate on which the pressure-sensitive adhesive layer is disposed has been corona treated.

9. An adhesive film of any one of the preceding claims wherein the substrate is selected from films of polyester, poly(meth)acrylate, polyethylene, polypropylene, polyamide, polyimide, polyphenylene sulphide, polytetrafluoroethylene and polyvinylchloride.

10. A method of making an adhesive film according to any one of claims 1 to 9 comprising applying the adhesive composition as defined in any one of claims 1 to 6 to the film substrate and curing the composition to form the pressure-sensitive adhesive film, or coating the adhesive composition on a release film or release paper coated with a release agent, curing the composition and then transferring the cured composition to the substrate.

11. The use of a pressure-sensitive adhesive film according to any one of claims 1 to 9 for the protection or masking of flat panel display members, optical members or electronic parts.

## Patentansprüche

1. Haft-Klebefilm, der ein Substrat und eine Haft-Klebeschicht, die auf zumindest einer Oberfläche des Substrats angeordnet ist, umfasst, wobei die Haft-Klebeschicht ohne Primerschicht dazwischen an das Substrat angrenzend ist und aus einer Silikon-Haft-Klebezusammensetzung hergestellt ist, die Folgendes umfasst:
(A) 100 bis 80 Gewichtsteile eines Diorganopolysiloxans mit zumindest zwei Alkenylgruppen und Phenylgruppen in einem Molekül, wobei die Phenylgruppen 1,0 bis 12 mol-% aller organischer Gruppen ausmachen und die Alkenylgruppen in einer Menge von 0,0005 bis 0,05 mol pro 100 g des Diorganopolysiloxans enthalten sind und das Diorganopolysiloxan eine Viskosität von zumindest 100.000 mPa·s bei 25 °C aufweist,
(B) 0 bis 20 Gewichtsteile eines Organopolysiloxans, das R¹₃SiO_{0,5}-Einheiten und SiO₂-Einheiten in einem R¹₃SiO_{0,5}/SiO₂-Molverhältnis in einem Bereich von 0,6 bis 1,7 umfasst, worin R¹ eine einwertige C₁-C₁₀-Kohlenwasserstoffgruppe ist, wobei das Gesamtgewicht der kombinierten Komponenten (A) und (B) 100 Gewichtsteile ausmacht,
(C) ein Organohydrogenpolysiloxan, das zumindest drei SiH-Gruppen enthält, in solch einer Menge, dass es ein Molverhältnis der SiH-Gruppen zu den Alkenyl-gruppen in den Komponenten (A) und (B) im Bereich von 0,5 bis 20 ergibt,
(D) 0 bis 8,0 Gewichtsteile eines Verzögerers,
(E) ein Additionsreaktionskatalysator in solch einer Menge, dass er 5 bis 2.000 ppm eines Edelmetalls bezogen auf das Gesamtgewicht der Komponenten (A) und (B) ergibt, und
(F) 25 bis 900 Gewichtsteile eines organischen Lösungsmittels.

2. Klebefilm nach Anspruch 1, in dem die Klebezusammensetzung frei von der Komponente (B) ist.

3. Klebefilm nach Anspruch 1 oder 2, in dem die Klebezusammensetzung eine Klebefestigkeit von 0,001 bis 1,0 N/10 mm bereitstellt, wenn ein Testfilm, der einen 23 µm dicken Polyethylenterephthalatfilm und eine darauf beschichtete 30 µm dicke gehärtete Schicht der Haft-Klebezusammensetzung umfasst, einer 180-Grad-Trennprüfung nach JIS Z-0237 unterzogen wird.

4. Klebefilm nach Anspruch 1, 2 oder 3, in dem das Diorganopolysiloxan (A) in der Klebezusammensetzung aus jenen der folgenden Formeln (1), (2) und (3) ausgewählt ist:
R³ₐR²₍₃₋ₐ₎SiO(R³R²SiO)ₘ(R²₂SiO)ₙSiR²₍₃₋ₐ₎R³ₐ (1)
HOR²₂SiO(R³R²SiO)ₘ₊₂(R²₂SiO)ₙSiR²₂OH (2)
(R³ₐR²₍₃₋ₐ₎SiO_{1/2})ₒ(R³R²SiO_{2/2})ₚ(R²₂SiO_{2/2})_{q}(R⁴SiO_{3/2})ᵣ(SiO_{4/2})ₛ (3)
worin
jedes R² unabhängig eine substituierte oder unsubstituierte einwertige Kohlenwasserstoffgruppe ist, die frei von aliphatischer Unsättigung ist;
R³ eine organische Gruppe mit einer Alkenylgruppe ist;
a eine ganze Zahl von 0 bis 3, bevorzugt 1, ist;
R⁴ aus den Optionen für R² und R³ ausgewählt ist;
m eine ganze Zahl von 0 oder größer ist, mit der Maßgabe, dass m 2 oder größer ist, wenn a Null ist, n eine ganze Zahl von zumindest 10 ist und die Summe m+n so ist, dass das Diorganopolysiloxan der Formel (1) oder (2) eine Viskosität von zumindest 100.000 mPa·s bei 25 °C aufweist;
o eine ganze Zahl von 3 bis 12 ist, p eine ganze Zahl von 0 oder größer ist, q eine ganze Zahl von zumindest 10 ist, die Summe r+s eine ganze Zahl von 1 bis 5 ist und die Summe o+p+q+r+s so ist, dass das Diorganopolysiloxan der Formel (3) eine Viskosität von zumindest 100.000 mPa·s bei 25 °C aufweist.

5. Klebefilm nach einem der vorangegangenen Ansprüche, wobei in der Klebezusammensetzung Phenylgruppen von 1,5 bis 9 mol-% aller organischer Gruppen im Diorganopolysiloxan (A) ausmachen.

6. Klebefilm nach einem der vorangegangenen Ansprüche, wobei in der Klebezusammensetzung das Diorganopolysiloxan (A) ein Gummidiorganopolysiloxan ist, das, wenn es in Toluol in einer Konzentration von 30 Gew.-% aufgelöst ist, eine Viskosität von 3.000 bis 30.000 mPa·s aufweist, gemessen bei 25 °C mit einem Rotationsviskosimeter.

7. Klebefilm nach einem der vorangegangenen Ansprüche, worin die Dicke des Haft-Klebefilms 2 bis 200 µm beträgt.

8. Klebefilm nach einem der vorangegangenen Ansprüche, worin die Oberfläche des Substrats, auf der die Haft-Klebeschicht angeordnet ist, einer Koronabehandlung unterzogen wurde.

9. Klebefilm nach einem der vorangegangenen Ansprüche, worin das Substrat aus Filmen aus Polyester, Poly(meth)acrylat, Polyethylen, Polypropylen, Polyamid, Polyimid, Polyphenylensulfid, Polytetrafluorethylen und Polyvinylchlorid ausgewählt ist.

10. Verfahren zur Herstellung eines Klebefilms nach einem der Ansprüche 1 bis 9, das das Aufbringen der Klebezusammensetzung wie in einem der Ansprüche 1 bis 6 definiert auf das Filmsubstrat und das Härten der Zusammensetzung, um den Haft-Klebefilm zu bilden, oder das Beschichten der Klebezusammensetzung auf einen Trennfilm oder ein Trennpapier, das mit einem Trennmittel beschichtet ist, das Härten der Zusammensetzung und dann das Transferieren der gehärteten Zusammensetzung auf das Substrat umfasst.

11. Verwendung eines Haft-Klebefilms nach einem der Ansprüche 1 bis 9 zum Schutz oder Abdecken von Flachbildschirmelementen, optischen Elementen oder elektronischen Teilen.

## Revendications

1. Film adhésif sensible à la pression, comprenant un substrat et une couche adhésive sensible à la pression disposée sur au moins une surface du substrat, ladite couche adhésive sensible à la pression étant contiguë au substrat sans couche d'amorce entre les deux, et étant préparée à partir d'une composition adhésive sensible à la pression à base de silicone comprenant
(A) de 100 à 80 parties en poids d'un diorganopolysiloxane ayant au moins deux groupes alcényle et un groupe phényle dans une molécule, les groupes phényle représentant de 1,0 à 12 % en moles de tous les groupes organiques, les groupes alcényle étant contenus en une quantité de 0,0005 à 0,05 mole pour 100 g du diorganopolysiloxane, et le diorganopolysiloxane ayant une viscosité d'au moins 100 000 mPa.s à 25 °C,
(B) de 0 à 20 parties en poids d'un organopolysiloxane comprenant des motifs R¹₃SiO_{0,5} et des motifs SiO₂ selon un rapport molaire R¹₃SiO_{0,5}/SiO₂ compris dans la plage allant de 0, 6 à 1,7, où R¹ est un groupe hydrocarboné en C₁ à C₁₀ monovalent, le poids total des composants (A) et (B) combinés qui est de 100 parties en poids,
(C) un organohydrogénopolysiloxane contenant au moins trois groupes SiH, en une quantité telle qu'elle donne un rapport molaire des groupes SiH aux groupes alcényle dans les composants (A) et (B) compris dans la plage allant de 0,5 à 20,
(D) de 0 à 8,0 parties en poids d'un retardateur,
(E) un catalyseur de réaction d'addition en une quantité telle qu'elle donne de 5 à 2000 ppm d'un métal noble par rapport au poids total des composants (A) et (B), et
(F) de 25 à 900 parties en poids d'un solvant organique.

2. Film adhésif selon la revendication 1, dans lequel ladite composition adhésive est exempte de composant (B).

3. Film adhésif selon la revendication 1 ou 2, dans lequel ladite composition adhésive est telle qu'elle offre une force d'adhésion de 0,001 à 1,0 N/10 mm lorsqu'un film à tester, comprenant un film de téréphtalate de polyéthylène de 23 µm d'épaisseur et une couche durcie de la composition adhésive sensible à la pression de 30 µm d'épaisseur revêtue sur celui-ci, est soumis à un test de pelage à 180 degrés selon la norme JIS Z-0237.

4. Film adhésif selon la revendication 1, 2 ou 3, dans lequel le diorganopolysiloxane (A) dans la composition adhésive est choisi parmi ceux des formules (1), (2) et (3) suivantes :
R³ₐR²₍₃₋ₐ₎SiO(R³R²SiO)ₘ(R²₂SiO)ₙSiR²₍₃-ₐ₎R³ₐ (1)
HOR²₂SiO(R³R²SiO)ₘ₊₂(R²₂SiO)ₙSiR²₂OH (2)
(R³ₐR²₍₃₋ₐ₎SiO_{1/2})ₒ(R³R²SiO_{2/2})ₚ(R²₂SiO_{2/2})_{q}(R⁴SiO_{3/2})ᵣ(SiO_{4/2})ₛ (3)
dans lesquelles
chaque R² est indépendamment un groupe hydrocarboné monovalent substitué ou non substitué exempt d'insaturation aliphatique ;
R³ est un groupe organique comprenant un groupe alcényle ;
a est un nombre entier de 0 à 3, de préférence 1 ;
R⁴ est choisi parmi les options pour R² et R³ ;
m est un nombre entier supérieur ou égal à 0, à condition que m soit supérieur ou égal à 2 lorsque a vaut 0, n est un nombre entier d'au moins 10, et la somme m+n est telle que le diorganopolysiloxane de formule (1) ou (2) a une viscosité d'au moins 100 000 mPa.s à 25 °C ;
o est un nombre entier de 3 à 12, p est un nombre entier supérieur ou égal à 0, q est un nombre entier d'au moins 10, la somme r+s est un nombre entier de 1 à 5, et la somme o+p+q+r+s est telle que le diorganopolysiloxane de formule (3) a une viscosité d'au moins 100 000 mPa.s à 25 °C.

5. Film adhésif selon l'une quelconque des revendications précédentes, dans lequel dans ladite composition adhésive, les groupes phényle représentent de 1,5 à 9 % en moles de tous les groupes organiques dans le diorganopolysiloxane (A).

6. Film adhésif selon l'une quelconque des revendications précédentes, dans lequel dans ladite composition adhésive, le diorganopolysiloxane (A) est une gomme de diorganopolysiloxane qui lorsqu'elle est diluée dans du toluène à une concentration de 30 % en poids a une viscosité de 3000 à 30 000 mPa.s, comme mesuré à 25 °C par un viscosimètre rotationnel.

7. Film adhésif selon l'une quelconque des revendications précédentes, dans lequel la couche adhésive sensible à la pression a une épaisseur de 2 à 200 µm.

8. Film adhésif selon l'une quelconque des revendications précédentes, dans lequel la surface du substrat sur laquelle la couche adhésive sensible à la pression est déposée a été traitée par décharge corona.

9. Film adhésif selon l'une quelconque des revendications précédentes, dans lequel le substrat est choisi parmi les films de polyester, poly(méth)acrylate, polyéthylène, polypropylène, polyamide, polyimide, sulfure de polyphénylène, polytétrafluoroéthylène et polychlorure de vinyle.

10. Procédé de préparation d'un film adhésif selon l'une quelconque des revendications 1 à 9, comprenant l'application de la composition adhésive telle que définie selon l'une quelconque des revendications 1 à 6 sur le substrat filmogène et le durcissement de la composition pour former le film adhésif sensible à la pression, ou le revêtement de la composition adhésive sur un film antiadhésif ou un papier antiadhésif enduit d'un agent antiadhésif, le durcissement de la composition et ensuite le transfert de la composition durcie sur le substrat.

11. Utilisation d'un film adhésif sensible à la pression selon l'une quelconque des revendications 1 à 9 pour la protection ou le masquage d'éléments d'affichage à écran plat, d'éléments optiques ou de parties électroniques.
